**Europäisches Patentamt**

**European Patent Office**

**Office européen des brevets**

(11) Veröffentlichungsnummer: **0 182 936**
**B1**

## (12) EUROPÄISCHE PATENTSCHRIFT

(45) Veröffentlichungstag der Patentschrift:
**08.06.88**

(21) Anmeldenummer: **84114527.9**

(22) Anmeldetag: **30.11.84**

(51) Int. Cl.⁴: **F 16 H 1/44**

(54) **Differentialgetriebe, insbesondere für Antriebsachsen von Fahrzeugen.**

(43) Veröffentlichungstag der Anmeldung:
**04.06.86 Patentblatt 86/23**

(45) Bekanntmachung des Hinweises auf die Patenterteilung:
**08.06.88 Patentblatt 88/23**

(84) Benannte Vertragsstaaten:
**AT DE FR GB IT SE**

(56) Entgegenhaltungen:
**EP-A-0 017 098**

(73) Patentinhaber: **Politechnika Lodzka, ul. Zwirki 36, 90-924 Lodz (PL)**
Patentinhaber: **Fabryka Samochodow Rolniczych "Polmo", ul. Warszawska 349, PL-61057 Poznan (PL)**

(72) Erfinder: **Dzida, Jan, Mnich 244, PL-43-422 Chybie (PL)**
Erfinder: **Romaniszyn, Kazimierz, ul. Lagodna 25/7, PL-43-300 Bielsko-Biala (PL)**

(74) Vertreter: **Füchsle, Klaus, Dipl.-Ing., Hoffmann. Eitle & Partner Patentanwälte Arabellastrasse 4, D-8000 München 81 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Differentialgetriebe, insbesondere für Antriebsachsen von Fahrzeugen, mit veränderlichem Eigenreibungsmoment in Abhängigkeit vom Verhältnis der Drehzahlen der Achswellen.

Aus dem polnischen Patent Nr. 118 791 (EP-A-0 017 098) ist ein Differentialgetriebe mit veränderlichem Eigenreibungsmoment je nach dem Verhältnis der Drehzahlen von Achswellen des Fahrzeugs bekannt, das eine Mehrscheibenfriktionskupplung enthält, deren Außennabe, die einen Teil des Differentialgetriebegehäuses bildet, mit der Innennabe gekuppelt ist durch Reibscheiben, die sich unter Druck von axial wirkenden Federn befinden. In der Mitte der Innennabe ist auf der Achswelle undrehbar eine vieleckige Buchse aufgesetzt. Zwischen den Wänden dieser Buchse und der inneren Zylinderfläche der Innennabe sind mit Radialspiel Rollen angeordnet, die durch einen Käfig gehalten sind, der mit einer Zentriereinrichtung in der symmetrischen Lage gegenüber den wänden der vieleckigen Buchse versehen ist. Der Käfig besitzt darüber hinaus einen Reibteil, der vorzugsweise kegelig geformt ist, angepreßt an die öffnung in dem Differentialgetriebegehäuse, die mit der Form dem Reibteil des Käfigs entspricht, durch eine Druckscheibe, gestützt am Flansch des Käfigs, Stößel mit der Druckscheibe verbunden und durch eine zusätzliche Scheibe, die mit den Stösseln verbunden ist, angeordnet außerhalb des Differentialgetriebes, zwischen welchem und dem Differentialgetriebegehäuse Spannfedern angeordnet sind. Die Enden der Stößel außerhalb des Differentialgetriebegehäuses kommen in Berührung mit der Stirnkurve mit den Vertiefungen, deren Anzahl der Menge der Stößel gleich ist. Die Stirnkurve ist drehbar gegenüber dem Differentialgetriebegehäuse und undrehbar gegenüber dem Antriebsachsengehäuse aufgesetzt.

Das Ziel der Erfindung ist eine Vereinfachung der Konstruktion des Differentialgetriebes mit veränderlichem Eigenreibungsmoment sowie eine Verbesserung der Konstruktion der Zentriereinrichtung.

Das Differentialgetriebe nach der Erfindung besitzt eine Mehrscheibenfriktionskupplung, die die mit dem Differentialgetriebegehäuse verbundene Außennabe enthält, an welcher die äußeren Reibscheiben befestigt werden, und die in dem Differentialgetriebegehäuse drehbar aufgesetzte Innennabe, an welcher die inneren Reibscheiben befestigt werden. An einer Seite der inneren und äußeren Reibscheiben sind Druckfedern angeordnet, die axial wirken. In der Mitte der Innennabe ist an der Achswelle undrehbar die vieleckige Buchse befestigt. Zwischen den Wänden der vieleckigen Buchse und der inneren Zylinderfläche der Innennabe sind mit Radialspiel die Rollen angeordnet, die durch einen Käfig gehalten sind, der mit einer Zentriereinrichtung in der symmetrischen Lage gegenüber den Wänden der vieleckigen Buchse versehen ist. Der Käfig besitzt einen flachen Reibflansch, der zwischen der mit dem Differentialgetriebegehäuse vereinigten Außennabe der Friktionskupplung und der Druckscheibe angeordnet ist. Zwischen der Druckscheibe und der Innennabe der Friktionskupplung sind mit Vorspannung eine oder mehrere Tellerfedern angeordnet. Diese Federn dienen zum Anpressen des Reibflansches des Käfigs an die Außennabe, die mit dem Differentialgetriebegehäuse vereinigt ist.

Der Einsatz von Tellerfedern ermöglicht eine Vereinfachung der Konstruktion, da der Einsatz der zusätzlichen Scheibe, die eine Übertragung des Drucks von Spannfedern an die Druckscheibe vermittelt, nicht notwendig ist.

Die vieleckige Buchse hat einerseits einen Zylinderteil, auf welchen drehbar der Käfig aufgesetzt ist, der die Rollen hält.

Die Federn bilden die Zentriereinrichtung in dem Differentialgetriebe nach der Erfindung und sie sind mit Vorspannung angebracht in radiallaufenden Sacklöchern in dem Zylinderteil der vieleckigen Buchse, in Verbindung mit Kugeln, die in diesen Löchern geführt werden und sich an Dachausschnitten abstützen, die in der inneren Zylinderfläche des Käfigs ausgeführt sind. Die Dachausschnitte in dem Käfig und die Löcher in der vieleckigen Buchse sind gegenseitig solcherart angeordnet, daß die Rollen die Mittellage an den Wänden der vieleckigen Buchse besetzen, wenn die Kugeln maximal vorgeschoben sind.

Die vieleckige Buchse ist außerdem an einer Seite mit einer Verzahnung versehen, die der Verzahnung des Kronrades des Differentialgetriebes entspricht, die mit den Ausgleichrädern kämmt. Das ermöglicht den maximalen Abstand der Lager des Differentialgetriebegehäuses zu erreichen. Die Stößel, die mit der Stirnkurve zusammenarbeiten, haben die Form von Zylindern, die verschiebbar und drehbar in den Löchern der mit dem Differentialgetriebegehäuse vereinigten Außennabe der Mehrscheibenfriktionskupplung angeordnet sind. Die Enden der Stößel sind an der Arbeitsfläche der Stirnkurve abgestützt, die drehbar gegenüber dem Differentialgetriebegehäuse und undrehbar gegenüber dem Antriebsachsengehäuse aufgesetzt ist. Von der Seite, die mit der Stirnkurve zusammenarbeitet, haben die Stößel eine Abflachung im Mittelteil, ferner einen bogenförmigen Übergang bis zum Außendurchmesser, die entgegengesetzten Enden der Stößel haben einen Durchmesserabsatz und sind in Löchern eingesetzt, die in der Druckscheibe ausgeführt sind.

Dank der aufgenommenen Form der Stößel und dem Einsatz von Tellerfedern mit nichtlinearer Charakteristik wurde eine große Beständigkeit von Stößeln und Kurve gewonnen, da die flachen Teile von Stößeln gut mit der Stirnkurve zusammenarbeiten, deren Mehrheit der Arbeitsfläche flach ist und die Kräfte des Anpreßdrucks der Stößel an der Kurve verhältnismäßig gering sind. Während der Geradeausfahrt des Fahrzeuges drehen das Differentialgetriebegehäuse, die Achswelle, die vieleckige Buchse, die Rollen, der Käfig und die Druckscheibe mit der gleichen Geschwindigkeit. Mit derselben Geschwindigkeit dreht auch die Außennabe der Friktionskupplung, in welcher die Stößel eingesetzt sind, während die Stirnkurve, die gegenüber dem Antriebsachsengehäuse festgestellt ist, stillgesetzt ist. Das ermöglicht den Stößeln, mit der Druckscheibe axiale Bewegungen durchzuführen, was eine periodische Kopplung des Käfigs mit der Außennabe der Friktionskupplung zur Folge hat.

Während der Fahrt des Fahrzeugs in einer Kurve unterscheidet sich die Geschwindigkeit der Außennabe der Friktionskupplung, die mit dem Differentialgetriebegehäuse vereinigt ist, von der Geschwindigkeit der Achswelle, an welcher die vieleckige Buchse befestigt ist. Während der Reibungskopplung des Käfigs mit der Außennabe wird der Käfig mit den Rollen gegenüber der vieleckigen Buchse gedreht, die geometrischen Größen aber der Kurve sowie das radiale Spiel der Rollen sind derart angepaßt, daß sogar während der Ausführung des Maximaldrehsinns durch das Fahrzeug der gegenseitige Drehwinkel des Käfigs und der vieleckigen Buchse zu klein ist, um das Festsetzen von Rollen erreichen zu können. In der Zeit dagegen, wenn die Reibungskopplung zwischen dem Käfig und der Außennabe ausbleibt, durch Wirkung der Kräfte der Federn der Zentriereinrichtung auf die Kugeln, die mit den Dachausschnitten des Käfigs zusammenarbeiten, hat er die Lage, in welcher die Rollen sich in der Mitte der Wände der vieleckigen Buchse befinden.

Im Fall der Überschreitung des Grenzwerts des Verhältnisses der Drehzahlen der Achswellen, was nur bei einem großen Schlupf eines der Räder erfolgen kann, wird der Käfig mit den Rollen um einen solchen Winkel gedreht, der das Festsetzen von Rollen und die Verbindung durch die Mehrscheibenfriktionskupplung der Achswelle mit dem Differentialgetriebegehäuse zur Folge hat, was gleichbedeutend mit der Vergrößerung seines Eigenreibungsmoments ist. Die Außerbetriebsetzung der Mehrscheibenfriktionskupplung erfolgt durch Umkehr der Übertragung von Drehmoment durch die Rollenkupplung, was das Ausgehen von Rollen von der Lage des Festsetzens bewirkt und das Aufnehmen durch sie in der Mittellage an den Wänden der vieleckigen Buchse zur Folge hat, die durch die Zentriereinrichtung aufgezwungen wurde.

Das Differentialgetriebe wird nach der Erfindung durch einen kompakten Aufbau charakterisiert und die Zentriereinrichtung ist einfach und zuverlässig.

Der Gegenstand der Erfindung ist an dem Ausführungsbeispiel in der Zeichnung dargestellt, in welcher

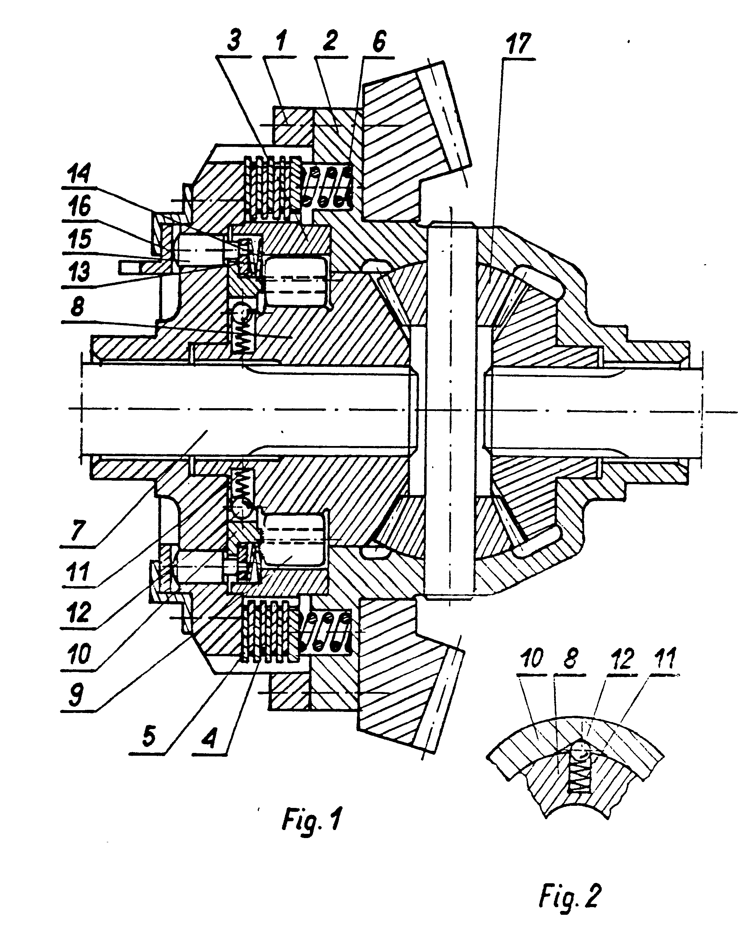

Fig. 1 ein Differentialgetriebe im Axialquerschnitt
und
Fig. 2 das Fragment der Zentriereinrichtung des Differentialgetriebes im Querschnitt zeigt.

Das Differentialgetriebe hat eine Friktionskupplung, die aus einer Außennabe 1 besteht, die an dem Differentialgetriebe 2 befestigt ist, aus einer Innennabe 3, die in diesem Gehäuse drehbar aufgesetzt ist, sowie aus inneren Reibscheiben 4 und äußeren Reibscheiben 5, die mit Schraubendruckfedern 6 zusammengedrückt sind. An der Achswelle 7 ist an der Vielnut die vieleckige Buchse 8 befestigt, zwischen deren Wänden und der Innenzylinderfläche der Außennabe 3 mit Radialspiel die Rollen 9 angeordnet sind, die in der Mittellage an den Wänden der vieleckigen Buchse 8 durch einen Käfig 10, versehen mit der Zentriereinrichtung, gehalten sind. Der Käfig 10 ist drehbar auf den Zylinderteil der vieleckigen Buchse 8 aufgesetzt. Die Zentriereinrichtung besteht aus Federn 11, die mit Vorspannung in radial laufenden Sacklöchern in dem Zylinderteil der vieleckigen Buchse 8 angeordnet sind, und aus in diesen Löchern geführten Kugeln 12, die sich an Dachausschnitten in der Innenzylinderfläche des Käfigs 10 abstützen. Diese Ausschnitte sind solcherart gegenüber den Löchern in der vieleckigen Buchse angeordnet, daß der Mittellage von Rollen 9 an den Wänden der vieleckigen Buchse 8 das maximale Vorschieben von Kugeln 12 entspricht.

Der Käfig 10 hat außerdem den flachen Reibflansch, der an der mit dem Differentialgetriebegehäuse 2 vereinigten Außennabe 1 angepreßt ist mit Hilfe einer Druckscheibe 13 durch zwei Tellerfedern 14. In den Löchern, die in der Außennabe ausgeführt sind, werden verschiebbar und drehbar Zylinderstößel 15 eingesetzt. Von der Druckscheibenseite 13 haben die Stößel 15 Durchmesserabsätze und sind eingesetzt in Löchern, die in der Druckscheibe 13 ausgeführt sind. Die entgegengesetzten Enden der Stößel 15 sind an der Arbeitsfläche der Stirnkurve 16 abgestützt und haben im Mittelteil eine Abflachung und ferner einen bogenförmigen Übergang zum Außendurchmesser.

Die Stirnkurve 16 ist drehbar an der Außennabe 1 der Friktionskupplung befestigt und versehen mit einem Fortsatz, der zu ihrem Stillsetzen gegenüber dem Antriebsachsengehäuse dient.

An der vieleckigen Buchse 8 ist die Verzahnung des Kronrades ausgeführt, das mit den Auslgeichrädern 17 des Differentialgetriebes kämmt.

**Patentansprüche**

1. Differentialgetriebe, insbesondere für Antriebsachsen von Fahrzeugen, mit veränderlichem Eigenreibungsmoment in Abhängigkeit vom Verhältnis der Drehzahlen der Achswellen, mit einer Mehrscheibenfriktionskupplung, deren Außennabe (1) mit dem Differentialgetriebegehäuse (2) verbunden ist und deren Innennabe (3) in diesem Gehäuse drehbar aufgesetzt ist und wobei an einer Seite von inneren und äußeren Reibscheiben (4, 5) der Friktionskupplung axial wirkende Druckfedern (6) angeordnet sind, wobei in der Mitte der Innennabe (3) an der Achswelle (7) undrehbar eine vieleckige Buchse (8) aufgesetzt ist, wobei zwischen den Wänden dieser Buchse und der Innenzylinderfläche der Innennabe (3) Rollen (9) mit Radialspiel angeordnet sind, die in symmetrischer Lage zu den Wänden der vieleckigen Buchse gehalten sind durch einen Käfig (10), der mit einer Federzentriereinrichtung (11, 12) versehen ist, wobei der Käfig einen Reibteil mit Flansch aufweist, der mit Hilfe einer Druckscheibe (13) durch Federn (14) an die Außennabe (1), die mit dem Differentialgetriebegehäuse vereinigt ist, angepreßt ist, und wobei die Druckscheibe mit Stößeln (15) verbunden ist, deren Enden an einer Arbeitsfläche einer Stirnkurve (16) abgestützt sind, die drehbar gegenüber dem Differentialgetriebegehäuse und undrehbar gegenüber dem Antriebsachsengehäuse aufgesetzt ist,
dadurch gekennzeichnet, daß der Reibflansch des Käfigs (10), der die Rollen (9) hält, flach ist sowie zwischen der Druckscheibe (13) und der mit dem Differentialgetriebegehäuse (2) vereinigten Außennabe (1) der Friktionskupplung angeordnet ist, an welche er durch eine oder mehrere Tellerfedern (14) angepreßt ist, die auf einer Seite an der Druckscheibe (13) und auf der anderen Seite an der Innennabe (3) der Mehrscheibenfriktionskupplung abgestützt ist/sind.

2. Differentialgetriebe nach Anspruch 1, dadurch gekennzeichnet, daß die vieleckige Buchse (8) von einer Seite einen Zylinderteil aufweist, auf welchem drehbar der Käfig (10) aufgesetzt ist, der die Rollen (9) hält.

3. Differentialgetriebe nach Anspruch 1 oder 2, dadurch gekennzeichnet, daß die Zentriereinrichtung aus Federn (11) besteht, die mit Vorspannung in radial laufenden Sacklöchern in dem Zylinderteil der vieleckigen Buchse (8) angeordnet sind, und aus in diesen Löchern geführten Kugeln (12), die sich an Dachausschnitten abstützen, die in der Innenzylinderfläche des Käfigs (10), der die Rollen (9) hält, ausgeführt sind, wobei die Dachausschnitte in dem Käfig (10) und die Löcher für Federn (11) und Kugeln (12) in der vieleckigen Buchse (8) gegenseitig derart angeordnet sind, daß die Rollen die Mittellagen an den Wänden der vieleckigen Buchse (8) besetzen bei maximalem Vorschieben der Kugeln (12).

4. Differentialgetriebe nach Anspruch 1, dadurch gekennzeichnet, daß die vieleckige Buchse (8) von einer Seite eine Verzahnung hat, die der Verzahnung eines Kronrades entspricht, die mit Ausgleichrädern (17) des Differentialgetriebes kämmt.

5. Differentialgetriebe nach Anspruch 1, dadurch gekennzeichnet, daß die Stößel (15) die Form von Zylindern haben, die verschiebbar und drehbar in Löchern der Außennabe (1) der Friktionskupplung angeordnet sind, die mit dem Differentialgetriebegehäuse (2) vereinigt ist, wobei die Stößel von der mit der Stirnkurve (16) zusammenarbeitenden Seite in dem Mittelteil eine Abflachung und ferner einen bogenförmigen Übergang bis zum Außendurchmesser aufweisen, und die entgegengesetzten Enden der Stößel einen Durchmesserabsatz haben und in Löcher eingesetzt sind, die in der Druckscheibe (13) ausgeführt sind.

**Claims**

1. Differential gear, in particular for driving axles of motor vehicles, with variable internal friction torque dependent on the ratio of the speeds of the axle shafts, with a multi-plate friction clutch, the outer hub (1) of which is connected to the differential gear casing (2) and the inner hub (3) of which is mounted rotatably in this casing and in which arrangement there are axially acting compression springs (6) on one side of inner and outer friction plates (4, 5) of the friction clutch, a polygonal bush (8) mounted unrotatably on the axle shaft (7) in the centre of the inner hub (3), rollers (9) arranged with radial play between the walls of this bush and the inner cylindrical surface of the inner hub (3), which rollers are held in symmetrical position with respect to the walls of the polygonal bush by a cage (10) which is provided with a spring centring device (11, 12), in which arrangement the cage has a friction part with flange, which is pressed with the oid of a thrust plate (13) by springs (14) against the outer hub (1), which is united with the differential gear casing, and in which arrangement the thrust plate is connected to push rods (15), the ends of which bear against a working surface of a face cam (16) which is mounted rotatably with respect to the differential gear casing and unrotatably with respect to the driving axle casing,
characterized in that the friction flange of the cage (10), which holds the rollers (9), is flat and is arranged between the thrust plate (13) and the outer hub (1) of the friction clutch, united with the differential gear casing (2), against which hub it is pressed by one or more plate springs (14), which bear on one side against the thrust plate (13) and on the other side against the inner hub (3) of the multi-plate friction clutch.

2. Differential gear according to claim 1, characterized in that the polygonal bush (8) has from one side a cylinder part, on which the cage (10) which holds the rollers (9) is rotatably mounted.

3. Differential gear according to claim 1 or 2, characterized in that the centring device consists of springs (11) which are arranged with prestress in radially running blind holes in the cylinder part of the polygonal bush (8), and balls (12) which are carried in these holes and bear against pitched cut-outs, which are made in the inner cylindrical surface of the cage (10) which holds the rollers (9) in which arrangement the pitched cut-outs in the cage (10) and the holes for springs (11) and balls (12) in the polygonal bush (8) are disposed with respect to one another in such a way that the rollers occupy the central positions at the walls of the polygonal bush (8) under a maximum advancement of the balls (12).

4. Differential gear according to claim 1, characterized in that the polygonal bush (8) has from one side a toothing which corresponds to the toothing of a crown wheel, which meshes with compensating wheels (17) of the differential gear.

5. Differential gear according to claim 1, characterized in that the push rods (15) have the form of cylinders which are disposed displaceably and rotatably in holes of the outer hub (1) of the friction clutch, which is united with the differential gear casing (2), in which arrangement the push rods have, in the central part, from the side interacting with the face cam (16), a flattened portion and, furthermore, an arcuate transition up to the outside diameter and the opposite ends of the push rods have a diameter reduction and are fitted in holes which are made in the thrust plate (13).

**Revendications**

1. Différentiel, en particulier pour arbres de transmission de véhicules, à moment de frottement propre variant en fonction du rapport entre les vitesses de rotation des arbres d'essieu, avec un embrayage à friction à disques multiples dont le moyeu extérieur (1) est relié à la boîte du différentiel (2) et dont le moyeu intérieur (3) est monté rotatif dans cette boîte tandis que sont disposés, sur un côté des disques de friction (4, 5) intérieurs et extérieurs de l'embrayage à friction, des ressorts de pression (6) agissant dans le sens axial, une douille (8) polygonale étant montée calée en rotation sur l'arbre d'essieu (7) au milieu du moyeu intérieur (3) tandis qu'entre les parois de cette douille et la surface cylindrique intérieure du moyeu intérieur (3) sont disposés avec jeu radial des rouleaux (9) qui sont maintenus dans une position symétrique par rapport aux parois de la douille polygonale par une cage (10) que est pourvue d'un dispositif de centrage à ressort (11, 12), ladite cage présentant un élément de friction à bride qui est serré à l'aide d'un disque de pression (13) par des ressorts (14) contre le moyeu extérieur (1) relié lui-même à la boîte du différentiel, et le disque de pression (13) étant relié à des coulisseaux (15) dont les extrémités s'appuient contre une surface de travail d'une came frontale (16) qui est montée de façon à pouvoir tourner par rapport à la boîte du différentiel tout en étant calée en rotation par rapport à la boîte de l'arbre primaire, caractérisé en ce que la bride de frottement de la cage (10) qui maintient les rouleaux (9) est plate et est disposée entre le disque de pression (13) et le moyeu extérieur (1) de l'embrayage à friction qui est relié à la boîte du différentiel (2), contre lequel elle est maintenue serrée par un ressort à disques ou par plusieurs ressorts à disques (14) qui prennent appui d'un côté contre le disque de pression (13) et de l'autre côté contre le moyeu intérieur (3) de l'embrayage à friction à disques multiples.

2. Différentiel selon la revendication 1, caractérisé en ce que la douille (8) polygonale présente d'un côté une partie cylindrique sur laquelle est montée rotative la cage (10) qui maintient les rouleaux (9).

3. Différentiel selon la revendication 1 ou 2, caractérisé en ce que le dispositif de centrage est fait de ressorts (11) qui sont disposés sous prétension dans des trous borgnes dirigés dans le sens radial, prévus dans la partie cylindrique de la douille (8) polygonale, et de billes (12) disposées dans ces trous qui prennent appui contre des entailles en forme de toit prévues dans la surface cylindrique intérieure de la cage (10) qui maintient les rouleaux (9), les entailles en forme de toit prévues dans la cage (10) et les trous pour les ressorts (11) et les billes (12) prévus dans la douille (8) polygonale étant disposés réciproquement de telle façon que les rouleaux occupent les positions médianes sur les parois de la douille (8) polygonale lorsque les billes (12) sont en position d'avancée maximum.

4. Différentiel selon la revendication 1, caractérisé en ce que la douille (8) polygonale présente d'un côté une denture qui correspond à la denture de chant d'une couronne engrenant avec des satellites (17) du différentiel.

5. Différentiel selon la revendication 1, caractérisé en ce que les coulisseaux (15) ont la forme de cylindres qui sont disposés coulissants de façon à pouvoir coulisser et tourner dans des trous du moyeu extérieur (1) de l'embrayage à friction qui est réuni à la boîte du différentiel (2), ces coulisseaux présentant dans la partie médiane, du côté coopérant avec la came frontale (16) un méplat et de plus un élément de transmission de forme arquée jusqu'au diamètre extérieur, et les extrémités opposées des coulisseaux présentent une réduction en gradin du diamètre et étant engagées dans des trous qui sont ménagés dans le disque de pression (13).

Fig. 1

Fig. 2